# EUROPEAN PATENT SPECIFICATION

(11) **EP 0 596 547 B1**
(45) Date of publication and mention of the grant of the patent: **27.11.1996**
(21) Application number: 93202647.9
(22) Date of filing: 14.09.1993
(51) Int. Cl.: B42D 15/10, B32B 27/08

(54) **Laminated identification document, as well as method for manufacturing it**
Identifikationsdokument aus Schichtstoff, und Verfahren zu seiner Herstellung
Pièce d'identité stratifiée, et méthode pour sa fabrication

(30) Priority: 13.10.1992 NL 9201772
(43) Date of publication of application: 11.05.1994
(73) Proprietor: DORNED B.V., NL-1016 AX Amsterdam (NL)
(72) Inventor: Takeda, Shigekazu, Tokyo (JP)
(74) Representative: Lips, Hendrik Jan George, Ir.

(56) References cited:
- EP-A- 0 404 463
- FR-A- 2 513 572
- GB-A- 2 122 541
- US-A- 3 669 789

## Description

The invention relates to a laminated identification document consisting of a laminate of two similar transparent covering sheets completely overlying each other, consisting of thermosetting plastic at their outer sides turned away from each other, and being provided with respective bonding layers of thermoplastic material at their inner sides facing each other, and having been laminated onto each other by hot pressing enclosing a card or sheet with identification data.

The invention also relates to the manufacture of such an identification document.

In the sense of this invention, identification document is understood to mean cards, like access cards, bank cards, credit cards, as well as documents issued by the government, such as identity cards, passports, drivers licences, and the like. In order to protect such documents meant for specifically personal use against forgery, they are mostly designed in the way as described in the introduction, that is, coated with a laminate of thermosetting plastic material. Therein, it is common practice to surround the document concerned, consisting of printed paper, cardpaper or plastic material, with two transparent covering sheets of thermosetting polyester material, both provided with a thin bonding layer of thermoplastic material, and subsequently laminate the entirety by hot pressing. A thus prepared identification document does offer a primary protection against forgery, but does not completely exclude it. Namely, it remains possible to open the laminate by a heat treatment, e.g. by means of a hot iron, change the data of the document, e.g. by applying another passport photo, forging a signature or the like, and subsequently laminate the thus forged document anew.

It is the object of the invention, to provide a laminated identification document, in which the chance of forgery has been restricted to a minimum.

To that end, the invention provides a laminated identification document as defined in the introduction, characterized in that each covering sheet consists of a laminate of at least two thin sheets of thermosetting plastic laminated onto each other, with a thermoplastic bonding layer between every two adjacent sheets.

The use of a larger number of relatively thin layers of polyester or a similar thermosetting material with intermediate bonding layers has a number of important advantages over the use of two relatively thick polyester layers with only one bonding layer in between. First, it is rather difficult to break open such a laminate. Whereas a document laminate consisting of two single, thick covering layers can be easily openend by heating, since on adequate heating by means of an iron or hot air the adhesive layer between the two polyester layers will melt easily, with the multiple structure according to the invention this is much more difficult, since on heating such a structure random adhesive layers can melt, whereas the relevant adhesive layer, namely the one at the spot of the card with the identification data, may not have been disengaged yet. Therefore, this means a very time-consuming job, since it is hard to determine where exactly the document card is situated in the laminate. Moreover, when for example the upper thin layer comes off, it is very vulnerable, so that damage can easily arise, which will show afterwards that document forgery has been made. Therein, the degree of complexity can be further increased in that both covering sheets contain a different number of thin sheets of thermosetting material.

It has been found, that each thin sheet of thermosetting material, e.g. polyethylene terephtalate (PET), efficiently has a thickness of 10-50 µm, and each bonding layer has a thickness of 25-35 µm. Further, the number of thin sheets in a covering sheet can efficiently be 2 to 5.

The thin sheets of thermosetting material the covering layers have been composed of need not have the same thickness. It has appeared, that when the or some thin sheets of thermosetting material have different thicknesses, this makes it even harder to open the laminate in an undesirable way. Further, the or some thin sheets of thermosetting material can differ in colour. This means an additional security against undesirable opening of the laminate, because these colours together show a certain colour pattern, which will be disturbed, c.q discoloured, when the laminate is opened by heating and is sealed up again.

Moreover, undesirable opening can be considerably hindered further, in that in one or both of the covering sheets, one or more underlying thin sheets of thermosetting material have been perforated in an arbitrary way, for example with holes, slits and the like. Since on laminating, the adhesive layers of thermosetting material will penetrate these perforations, the bonding will be very strong and disengagement by heating will be extra hard.

Apart from the fact, that it is very difficult to open the laminate without damaging it, such a laminate composed of thin sheets has yet another important advantage. Namely, it is possible to apply marks into one or each of the covering sheets by means of embossed printing, which marks disappear on heating. These marks are applied with a suitable die or a roll, after laminating the identification document, and the embossed marks are imprinted into the outer thin polyester sheet. Now it has appeared, that such an embossment will completely disappear again on heating e.g. with an iron, so that a lack of the embossed marks shows that a forgery has been made. Applying embossed marks into a laminated identification document, in which the covering sheets are thick and single, is almost impossible, and if an embossment could be applied into such a covering sheet, this would not disappear on heating of the laminate, as it would with the laminate according to the invention.

The laminate according to the invention has further advantages, since UV-sensitive marks can be applied into the various thermoplastic adhesive layers, which marks will melt together or deform on melting loose and rebinding of the various thermoplastic layers, so that this also offers the possibility to observe forgery.

In manufacturing a laminate according to the invention, one starts from a number of thin polyester sheets having one side coated with a thermoplastic bonding layer. A method for manufacturing a laminated identification document comprises the following steps:
a) stacking a first number of thin sheets of thermosetting plastic material being coated with a thermoplastic bonding layer at one side, and with the bonding layers turned upwards;
b) positioning a card or sheet with identification data onto the upper bonding layer of this stack;
c) stacking a second number of said thin sheets on top of that, with the bonding layers facing downwards;
d) leading the thus obtained stack in between a pair of heated lamination pressing rollers.

Subsequently, as a next step in a continuous process, one can lead the obtained laminate in between a pair of embossed printing rollers, in order to apply the desired marks onto one or both of the outer polyester layers of the laminate.

The invention will now be explained further by means of the drawing. In the drawing,
Fig. 1 shows schematically in cross-section the structure of a laminated identification document according to the known art;
Fig. 2 shows schematically in cross-section the identification document after having been laminated;
Fig. 3 shows schematically in cross-section the structure of a laminated identification document according to an embodiment of the invention;
Fig. 4 shows schematically in cross-section this identification document after laminating; and
Fig. 5 a variant of the embodiment of fig. 4, provided with embossed printing.

For reasons of clarity, the thicknesses of the various layers of the layer structure have not been drawn to scale in the various Figures.

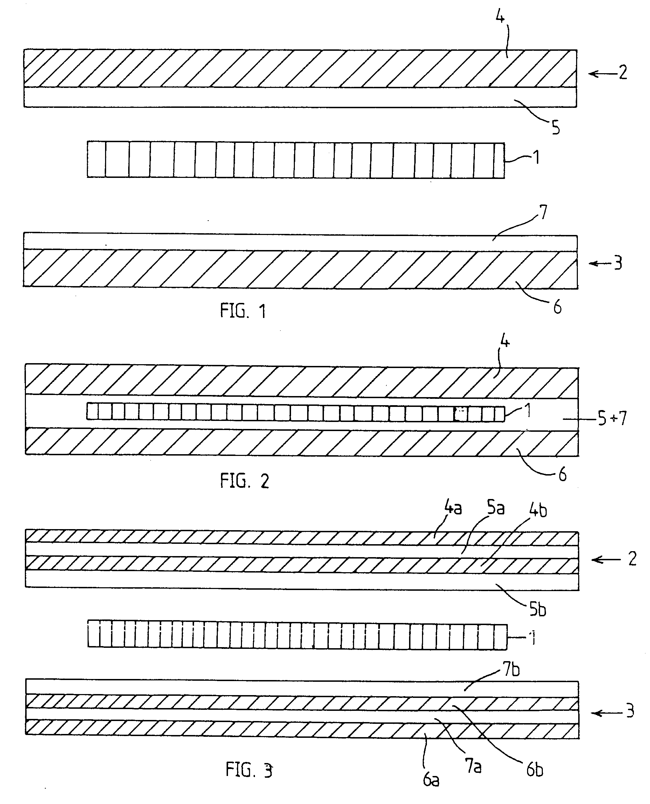

Fig. 1 shows in cross-section the structure of a laminated identification document, as is common in the art. An identification card or sheet 1 of cardpaper, paper, plastic material, provided with personal identification data, possibly provided with a passport photo, is positioned intermediate an upper covering layer and a lower covering layer 3. The upper covering layer consists of a layer of thermosetting resin, PET for example, and has its bottom side provided with a bonding layer of thermoplastic material, PE for example.

Correspondingly, the lower covering layer 3 consists of a layer of thermosetting resin 6 and a bonding layer 7. Both of the bonding layers 5 and 7 are facing each other with the identification card 1 in between. When such a layer structure is laminated by hot pressing, one obtains an identification document according to the structure of fig. 2. Both bonding layers 5 and 7 have blended into one bonding layer 5 + 7, with the identification card 1 entrapped therein.

A thus manufactured identification document does indeed offer a certain protection against forgery, but does not exclude the possibility thereof. If one heats such a laminate with an iron or hot air for example, the bonding layer 5 + 7 will soften, so that one can reach the entrapped card, and possibly apply falsifications on it, after which one presses the covering sheets tight onto each other again.

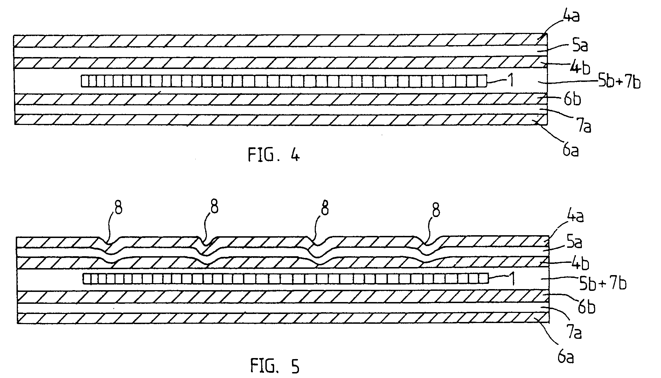

Fig. 3 shows schematically a cross-sectional structure of a laminated identification document according to an embodiment of the invention. Like in the embodiment of the Figs. 1 and 2, an identification card 1 consists of card-paper, paper, or plastic, and provided with identification data, positioned intermediate an upper covering sheet 2 and a lower covering sheet 3. In contrast to the embodiment of the Figs. 1 and 2, both covering sheets are not single layers, but multilayers consisting of a number of thin sheets of thermosetting resin, such as PET, and a number of bonding layers of thermoplastic material such as PE in between. In the structure according to Fig. 3, the upper covering sheet 2 has a first thin PET layer 4a, a first bonding layer 5a, a second thin PET layer 4b, and a second bonding layer 5b. Correspondingly, the lower covering sheet 3 consists of a first thin PET layer 6a, a first bonding layer 7a, a second thin PET layer 6b, and a second bonding layer 7b. After laminating one obtains a laminated identification document, such as shown in cross-section in Fig. 4. As can be seen, the identification card 1 is now enclosed between the blended bonding layer 5b + 7b.

With the invention, the individual layers are extremely thin. In the known embodiment according to Figs. 1 and 2, the total thickness of a covering sheet is 250 µm, the PET layer having a thickness of more than 100 µm. With the invention the total thickness of a covering sheet is comparable, but because there are more layers, these are correspondingly thinner. Here, the thickness of one PET layer is 50 µm or less, for example.

In the embodiment shown in Figs. 3 and 4, for reasons of clarity each covering sheet is illustrated as comprising two PET layers and two PE bonding layers. In practice, there can be more layers in one covering sheet. It has proved to be efficient, to have a covering sheet consist of five extremely thin PET layers, each being provided with a bonding layer.

As compared to the known laminated documents in which covering sheets are single, a laminated safety document according to the invention has great advantages where it concerns security against document forgery. On disengaging the bonding layers by heating (iron or hot air or the like), each bonding layer could come loose, so that it is not sure, whether the relevant layer in which the identification card is situated, is opened. This means, that forging is now extremely difficult, all the more, because of the fact, that the individual layers are extremely thin, and the laminate can get damaged very easily on heating it, for example when the adhesive layer of the upper PET layer comes loose first, and the PET layer wrinkles. The degree of complexity can be increased further by the possibility of choosing the number of layers in the upper and lower covering sheet differently as desired.

A futher security against forgery is shown in Fig. 5. Fig. 5 shows an alternative of the embodiment of Fig. 4, in which one has applied marks 8 into the upper covering sheet in its PET layer 4a by means of embossment printing. These marks 8 have been dimpled into this upper layer 4a, and as can be seen, it dimples slightly into the underlying layers, however, only to a very limited extent, so that the applied deformation is substantially situated in the upper layer 4a. The great advantage of this embossment printing is that it disappears when heating the laminate for example with an iron, in order to get access to the entrapped identification card 1, so that, if forgery and subsequent renewed lamination has occurred, this can be noted by the absence of the embossment printing marks.

This application of embossment printing occurs after the document has been laminated. Embossment printing can be efficiently incorporated as final step of the laminating process, which will then comprise composing the layers with the identification card positioned in between, laminating between two hot lamination pressing rollers, and subsequently applying embossment printing, for example also with the help of lamination pressing rollers. In this way, the laminated documents, provided with a security protection, can be manufactured easily and quickly.

In the above, the invention was explained by means of two embodiments. However, it will be obvious that the invention is not restricted thereto, and that many variations and modifications are possible within the scope of the invention. For example, more than two layers (five in particular) of thermosetting material can be used in every covering sheet, and the choice of thermosetting and plastic materials for the respective supporting and bonding layers is not restricted to PET and PE, but many other materials are equally suitable, the only requirement being that at least the upper covering sheet remains transparent after lamination.

While in the embodiment of Fig. 5, the embossment printing was applied by impression, it is also possible to apply embossment marks by pushing out, for example with the help of a die provided with mark perforations.

Apart from the embossment printing, more safety arrangements are possible, such as varying the thicknesses of the various sheets of thermosetting material, various colours for several of these sheets, and perforations. Further, one can also apply secret marks into the various bonding layers, by means of laser printing for example, which become visible on UV-illumination. This last option offers the particular safety that, if by heating with an iron or hot air the bonding layers are softened and start flowing, these additional marks will merge or disappear, so that this will also indicate whether a forgery has occurred.

## Claims

1. Laminated identification document consisting of a laminate of two similar transparent covering sheets completely overlying each other, consisting of thermosetting plastic at their outer sides turned away from each other, and being provided with respective bonding layers of thermoplastic material at their inner sides facing each other, and having been laminated onto each other by hot pressing enclosing a card or sheet with identification data, characterized in that each covering sheet consists of a laminate of at least two thin sheets of thermosetting plastic laminated onto each other, with a thermoplastic bonding layer between every two adjacent sheets.

2. Laminated identification document according to claim 1, characterized in that both covering sheets have a different number of the thin sheets of thermosetting material.

3. Laminated identification document according to claim 1 or 2, characterized in that each thin sheet of thermosetting material has a thickness of 10-50 µm, and each bonding layer has a thickness of 25-35 µm.

4. Laminated identification document according to one of the claims 1 - 3, characterized in that the number of thin sheets in a covering sheet is 2-5.

5. Laminated identification document according to one of the claims 1 - 4, characterized in that the or some of the thin sheets of thermosetting material are of different thickness.

6. Laminated identification document according to one of the claims 1 - 5, characterized in that the or some of the thin sheets of thermosetting material are of different colour.

7. Laminated identification document according to one of the claims 1 - 6, characterized in that in one or both of the covering sheets, one or more underlying thin sheets of thermosetting material have been perforated in an arbitrary way.

8. Laminated identification document according to one of the claims 1 - 7, characterized in that marks have been applied into one or both of the covering sheets by means of embossment printing, which marks will disappear entirely or almost entirely on heating.

9. Laminated identification document according to one of the claims 1 - 8, characterized in that UV-sensitive marks have been applied into one or more of the bonding layers.

10. Method for manufacturing a laminated identification document according to one of the preceding claims, characterized by the following steps:
a) stacking a first number of thin sheets of thermosetting plastic material being coated with a thermoplastic bonding layer at one side, and with the bonding layers turned upwards;
b) positioning a card or sheet with identification data onto the upper bonding layer of this stack;
c) stacking a second number of said thin sheets on top of that, with the bonding layers facing downwards;
d) leading the thus obtained stack in between a pair of heated lamination pressing rollers.

11. Method according to claim 10, characterized by the further step:
leading the obtained laminate in between a pair of embossed printing rollers.

## Patentansprüche

1. Folienbeschichtetes (laminiertes) Identifikationsdokument, bestehend aus einem Laminat aus zwei ähnlichen, transparenten, sich gänzlich überdeckenden Deckblättern, die an ihren voneinander abgewandten Außenseiten aus einem hitzehärtbaren (thermosetting) Kunststoff bestehen und die an ihren einander Zugewandten Innenseiten mit entsprechenden Haftschichten aus einem thermoplastischen Material bestehen, und die durch Heißpressen aufeinander laminiert sind, wobei sie eine Karte oder ein Blatt mit Erkennungsdaten einschließen, dadurch gekennzeichnet, daß
jedes Deckblatt aus einem Laminat aus wenigstens zwei dünnen hitzehärtbaren Folien besteht, die aufeinander laminiert sind, und daß jeweils eine thermoplastische Haftschicht zwischen je zwei benachbarten Folien vorhanden ist.

2. Identifikationsdokument nach Anspruch 1, dadurch gekennzeichnet, daß die beiden Deckblätter eine unterschiedliche Anzahl dünner Folien aus hitzehärtbarem Material aufweisen.

3. Identifikationsdokument nach Anspruch 1 oder 2, dadurch gekennzeichnet, daß jede dünne Folie aus hitzehärtbarem Material eine Dicke von 10 - 50 µm und jede Haftschicht eine Dicke von 25 - 35 µm hat.

4. Identifikationsdokument nach einem der vorhergehenden Ansprüche 1 bis 3, dadurch gekennzeichnet, daß die Anzahl der dünnen Folien pro Deckblatt zwischen 2 bis 5 beträgt.

5. Identifikationsdokument nach einem der vorhergehenden Ansprüche 1 bis 4, dadurch gekennzeichnet, daß die oder einige der dünnen Folien aus hitzehärtbarem Material unterschiedliche Dicken aufweisen.

6. Identifikationsdokument nach einem der vorhergehenden Ansprüche 1 bis 5, dadurch gekennzeichnet, daß die oder einige der dünnen Folien aus hitzehärtbarem Material unterschiedliche Farben aufweisen.

7. Identifikationsdokument nach einem der vorhergehenden Ansprüche 1 bis 6, dadurch gekennzeichnet, daß bei einem oder bei beiden Deckblättern eine oder mehrere der abgedeckten dünnen Folien aus hitzehärtbarem Material in zufallsgesteuerter Weise perforiert sind.

8. Identifikationsdokument nach einem der vorhergehenden Ansprüche 1 bis 7, dadurch gekennzeichnet, daß Markierungen auf einem oder beiden der Deckblätter mittels Reliefdruck aufgebracht sind, die gänzlich oder fast gänzlich bei Erhitzung verschwinden.

9. Identifikationsdokument nach einem der vorhergehenden Ansprüche 1 bis 8, dadurch gekennzeichnet, daß UV-empfindliche Markierungen in eine oder mehrere der Haftschichten eingebracht sind.

10. Verfahren zur Herstellung eines laminierten Identifikationsdokument nach einem der vorhergehenden Ansprüche, gekennzeichnet durch folgenden Schritte:
a) Stapeln einer ersten Anzahl von dünnen Folien aus hitzehärtbarem Material, die auf einer Seite mit einer thermoplastischen Haftschicht versehen sind, wobei die Haftschichten nach oben zeigen,
b) Positionieren einer Karte oder eines Blattes mit Identifikationsdaten auf die obere Haftschicht dieses Stapels,
c) Stapeln einer zweiten Anzahl von genannten dünnen Folien auf die Karten oder Blätter, wobei hierbei die Haftschichten nach unten zeigen,
d) Führen des so erhaltenen Stapels zwischen ein Paar erhitzter Laminier-Preßrollen.

11. Verfahren nach Anspruch 10, gekennzeichnet durch folgenden weiteren Schritt:
Führen des erhaltenen Laminats zwischen ein Paar von Reliefdruckrollen.

## Revendications

1. Pièce d'identité stratifiée comprenant un stratifié de deux feuilles de couverture transparentes semblables se recouvrant complètement l'une l'autre, constituées par une matière plastique thermodurcissable sur leurs côtés extérieurs se tournant le dos l'un à l'autre et comportant des couches de liaison respectives de matière thermoplastique sur leurs côtés intérieurs se faisant face, et une carte ou feuille portant des données d'identification enfermée entre elles et stratifiée sur elles par pression à chaud, caractérisée en ce que chaque feuille de couverture est constituée par un stratifié d'au moins deux minces feuilles de matière plastique thermodurcissable stratifiées l'une sur l'autre, avec une couche de liaison thermoplastique entre chaque paire de deux feuilles adjacentes.

2. Pièce d'identité stratifiée selon la revendication 1, caractérisée en ce que les deux feuilles de couverture ont des nombres différents de minces feuilles de matière thermodurcissable.

3. Pièce d'identité stratifiée selon la revendication 1 ou la revendication 2, caractérisée en ce que chaque mince feuille de matière thermodurcissable a une épaisseur de 10 à 50 µm, et que chaque couche de liaison a une épaisseur de 25 à 35 µm.

4. Pièce d'identité stratifiée selon l'une des revendications 1 à 3, caractérisée en ce que le nombre de minces feuilles dans une feuille de couverture est 2 à 5.

5. Pièce d'identité stratifiée selon l'une des revendications 1 à 4, caractérisée en ce que les minces feuilles de matière thermodurcissable, ou certaines d'entre elles, ont une épaisseur différente.

6. Pièce d'identité stratifiée selon l'une des revendications 1 à 5, caractérisée en ce que les minces feuilles de matière thermodurcissable, ou certaines d'entre elles, ont une couleur différente.

7. Pièce d'identité stratifiée selon l'une des revendications 1 à 6, caractérisée en ce que l'une des feuilles de couverture ou les deux, et l'une ou plusieurs des minces feuilles sous-jacentes de matière thermodurcissable ont été perforées d'une manière arbitraire.

8. Pièce d'identité stratifiée selon l'une des revendications 1 à 7, caractérisée en ce que des marques ont été appliquées sur l'une des feuilles de couverture ou sur les deux par impression en relief, lesquelles marques disparaissent entièrement ou presque entièrement lors d'un chauffage.

9. Pièce d'identité stratifiée selon l'une des revendications 1 à 8, caractérisée en ce que des marques sensibles aux ultraviolets ont été appliquées sur une ou plusieurs des couches de liaison.

10. Procédé pour fabriquer une pièce d'identité stratifiée selon l'une des revendications précédentes, caractérisé par les étapes suivantes :
(a) empiler un premier nombre de minces feuilles de matière plastique thermodurcissable revêtues d'une couche de liaison thermoplastique sur un côté, avec les couches de liaison tournées vers le haut;
(b) positionner une carte ou feuille avec des données d'identification sur la couche de liaison supérieure de cette pile;
(c) empiler un deuxième nombre desdites minces feuilles sur le sommet de cette pile, avec les couches de liaison regardant vers le bas;
(d) amener la pile ainsi obtenue entre une paire de rouleaux presseurs de stratification chauffés.

11. Procédé selon la revendication 10, caractérisé par l'étape supplémentaire suivante : amener le stratifié obtenu entre une paire de rouleaux d'impression en relief.
